# EUROPEAN PATENT APPLICATION

(11) **EP 4 524 859 A1**
(43) Date of publication of application: **19.03.2025**
(21) Application number: 24189452.6
(22) Date of filing: 18.07.2024
(51) Int. Cl.: G06Q 20/20, A47F 9/04, G07G 1/00, G07G 1/12

(54) **SALES DATA PROCESSING APPARATUS**

(30) Priority: 14.09.2023 JP 2023149643; 04.06.2024 JP 2024090669
(71) Applicant: Toshiba TEC Kabushiki Kaisha, Tokyo 141-8562 (JP)
(72) Inventor: KAWATA, Kento, Shinagawa-ku, Tokyo, 141-8562 (JP); ONO, Yasuhiro, Shinagawa-ku, Tokyo, 141-8562 (JP)
(74) Representative: Hoffmann Eitle

(57) **Abstract**

A sales data processing apparatus includes a first display device facing a first direction, a second display device facing a second direction opposite to the first direction, a first table that is disposed in front of the first display device and on which an item is placeable, a second table disposed lateral to the first display device, a bag hanger disposed on the second table and on which a bag is hangable, and a third table disposed directly below the first table.

## Description

### CROSS-REFERENCE TO RELATED APPLICATION(S)

This application is based upon and claims the benefit of priority from Japanese Patent Application No. 2023-149643, filed September 14, 2023, the entire contents of which are incorporated herein by reference.

### FIELD

Embodiments described herein relate generally to a sales data processing apparatus that enables a store clerk to easily assist a customer.

### BACKGROUND

A known self-service POS (point-of-sale) terminal enables a customer in a retail store, such as a supermarket, to perform an item registration process for registering an item and a payment process for making a payment for the item registered in the item registration process. Installing such a self-service POS terminal eliminates the need for a retail store to have an employee who operates a POS terminal and thereby makes it possible to save labor.

However, because a customer is less familiar with the operation of a POS terminal compared with a store clerk, it takes a lot of time for the customer to perform necessary processes.

### SUMMARY OF THE INVENTION

Embodiments of this disclosure provide a sales data processing apparatus that enables a store clerk to easily assist a customer.

According to an aspect of this disclosure, a sales data processing apparatus comprises a first display device facing a first direction; a second display device facing a second direction opposite to the first direction; a first table that is disposed in front of the first display device and on which an item is placeable; a second table disposed lateral to the first display device; a bag hanger disposed on the second table and on which a bag is hangable; and a third table disposed directly below the first table.

One of the objects of the present invention is to improve prior art techniques and overcome at least some of the prior art problems as for instance above illustrated. According to a first aspect of the present invention, it is provided a sales data processing apparatus comprising a first display device facing a first direction; a second display device facing a second direction opposite to the first direction; a first table that is disposed in front of the first display device and on which an item is placeable; a second table disposed lateral to the first display device; a bag hanger disposed on the second table and on which a bag is hangable; and a third table disposed directly below the first table.

Optionally, in the sales data processing apparatus according to the first aspect of the invention, the first table is attached to and supported by the bag hanger.

Optionally, in the sales data processing apparatus according to the first aspect of the invention, the second table includes a weight scale, and the sales data processing apparatus is configured to acquire a total weight of one or more items on the first and second tables based on an output from the weight scale.

Optionally, the sales data processing apparatus according to the first aspect of the invention further comprises a first processor configured to control the first display device; and a second processor configured to control the second display device.

Optionally, the sales data processing apparatus according to the first aspect of the invention further comprises a processor configured to control both of the first display device and the second display device.

Optionally, the sales data processing apparatus according to the first aspect of the invention further comprises a mounting table on which the first display unit and the second display unit are disposed and including a moving mechanism movable in the first direction and the second direction.

Optionally, the sales data processing apparatus according to the first aspect of the invention further comprises a fourth table, wherein the mounting table is between the second table and the fourth table, and at least one of the second table and the fourth table includes a connecting part that connects the at least one of the second table and the fourth table to the mounting table such that an orientation of a longitudinal direction of the at least one of the second table and the fourth table is changeable.

Optionally, in the sales data processing apparatus according to the first aspect of the invention, the second table includes the connecting part, and the second table further includes a top plate including a connecting part to which the bag hanger is attached such that an orientation of the bag hanger is changeable according to the orientation of the longitudinal direction of the second table.

Optionally, the sales data processing apparatus according to the first aspect of the invention further comprises a floor unit on which the mounting table is disposed, wherein the floor unit includes a guide along which the moving mechanism is movable.

Optionally, in the sales data processing apparatus according to the first aspect of the invention, the guide includes stoppers, each of which is disposed at an end of the guide.

Optionally, in the sales data processing apparatus according to the first aspect of the invention, the moving mechanism includes wheels, and the guide includes grooves for guiding the wheels.

Optionally, in the sales data processing apparatus according to the first aspect of the invention, the moving mechanism includes a first slide rail, and the guide includes a second slide rail connectable to the first slide rail.

Optionally, the sales data processing apparatus according to the first aspect of the invention further comprises a first reading device including a reading window facing the first direction; and a second reading device including a reading window facing the second direction.

Optionally, in the sales data processing apparatus according to the first aspect of the invention, the second reading device is disposed lateral to the second display device.

Optionally, in the sales data processing apparatus according to the first aspect of the invention, the second table includes a weight scale, and the sales data processing apparatus is configured to compare a weight measured by the weight scale with a weight of an item registered in an item master database.

Optionally, the sales data processing apparatus according to the first aspect of the invention further comprises a handy scanner that is disposed between the first display device and the second display device and adjacent to the second table.

Optionally, in the sales data processing apparatus according to the first aspect of the invention, the first table is formed of a transparent material.

Optionally, in the sales data processing apparatus according to the first aspect of the invention, the second table is disposed such that an item placed thereon is accessible from both of the first direction and the second direction.

Optionally, in the sales data processing apparatus according to the first aspect of the invention, upon receiving a switching operation, the sales data processing apparatus is configured to switch from a first mode in which a customer performs an item registration process for registering an item and a payment process of making a payment for the registered item, to a second mode in which both the customer and a store clerk can perform the item registration process and the customer performs the payment process.

Optionally, in the sales data processing apparatus according to the first aspect of the invention, the sales data processing apparatus is also switchable to a third mode in which the store clerk performs the item registration process and the payment process and to a fourth mode in which the store clerk performs the item registration process and the customer performs the payment process.

### BRIEF DESCRIPTION OF THE DRAWINGS

FIG. 1 is an external perspective view of a POS terminal according to an embodiment.
FIG. 2 is an external perspective view of the POS terminal according to the embodiment.
FIG. 3 is an external perspective view of a POS terminal according to a first variation.
FIG. 4 is an external perspective view of the POS terminal according to the first variation.
FIG. 5 is an external perspective view of a POS terminal according to a second variation.
FIG. 6 is an external perspective view of the POS terminal according to the second variation.
FIG. 7 is an external perspective view of a POS terminal according to a third variation.
FIG. 8 is an external perspective view of the POS terminal according to the third variation.
FIGs. 9A and 9B are external side views of the POS terminal according to the third variation.
FIG. 10 is an external perspective view of a mounting table according to the third variation.
FIG. 11 is an external side view of a bottom part of the mounting table.
FIG. 12 is an external side view of a bottom part of a mounting table according to a fourth embodiment.
FIG. 13 is an external perspective view of a POS terminal according to a fifth variation.
FIG. 14 is an external perspective view of the POS terminal according to the fifth variation.
FIG. 15 is an exploded view of the POS terminal according to the fifth variation in which a basket table and a packing table are disassembled.
FIG. 16 is an exploded view of the POS terminal according to the fifth variation in which the basket table and the packing table are disassembled.

### DETAILED DESCRIPTION

Hereinafter, embodiments will be described in detail with reference to the drawings. The present invention is not limited to the embodiments described below.

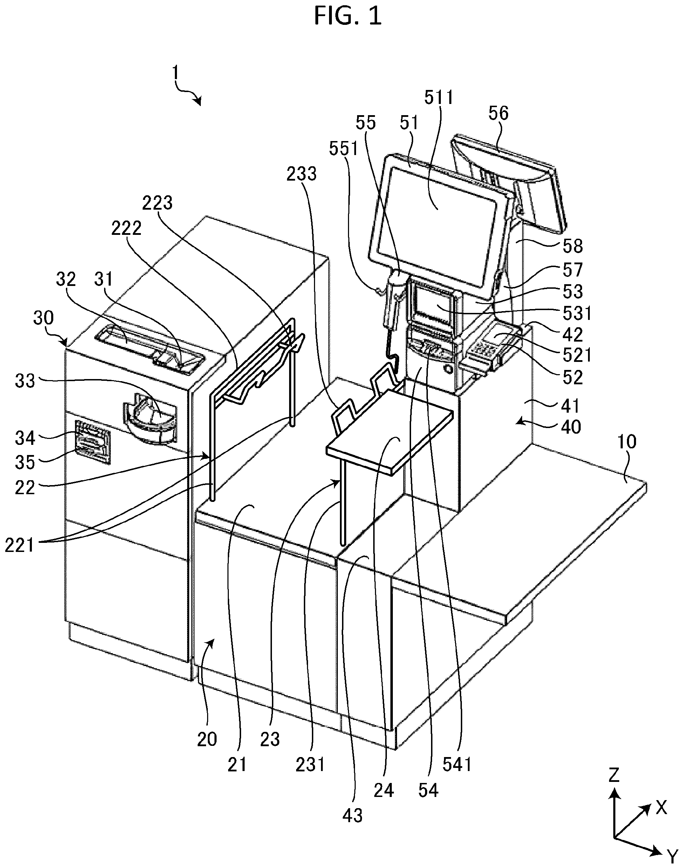

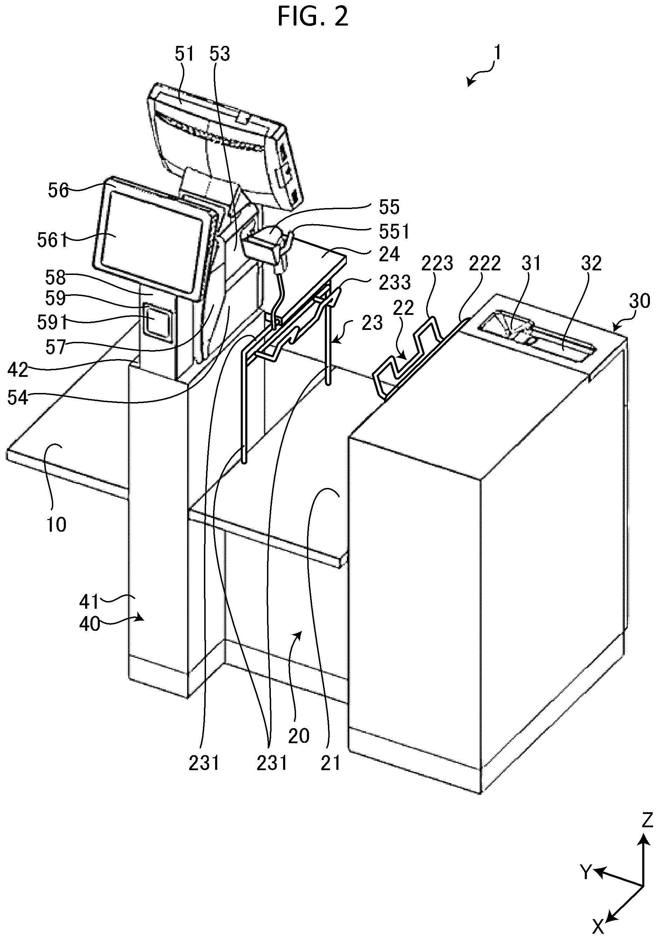

FIG. 1 is an external perspective view of a POS terminal 1 according to the present embodiment. FIG. 2 is another external perspective view of the POS terminal 1. The POS terminal 1 is operated by a customer to perform, for example, an item registration process for registering an item and a payment process for making a payment for the item registered in the item registration process.

With the POS terminal 1, the item registration process and the payment process can be performed solely by the customer. Therefore, a store does not need to have a store clerk for this purpose and can save labor. However, since the customer is less familiar with the operation of the POS terminal 1 compared with a store clerk, it takes a lot of time for the customer to perform the processes.

For the above reason, there is a demand for the POS terminal 1 that enables the store clerk to easily assist the customer.

The POS terminal 1 is configured such that the customer and the store clerk face each other. The customer and the store clerk operate the POS terminal 1 placed between them. FIG. 1 is a perspective view of the POS terminal 1 as viewed from the customer. FIG. 2 is a perspective view of the POS terminal 1 as viewed from the store clerk.

The POS terminal 1 includes a basket table 10, a packing table 20, an automatic change machine 30, and a mounting table 40. In the present embodiment, the vertical direction is referred to as a Z-axis direction, the direction in which the basket table 10, the packing table 20, and the automatic change machine 30 are arranged is referred to as a Y-axis direction, and the direction orthogonal to the Z-axis direction and the Y-axis direction is referred to as an X-axis direction. In other words, the direction in which the customer and the store clerk face each other is referred to as the X-axis direction.

The basket table 10 is a table on which a basket containing items collected by the customer is placed. The basket table 10 is disposed on the right side of the packing table 20 when viewed from the customer side. The basket table 10 may instead be disposed on the left side of the packing table 20 when viewed from the customer side. That is, the basket table 10 may be disposed on either side of the packing table 20. The basket table 10 is an example of a fourth table.

The automatic change machine 30 receives money and gives change. The automatic change machine 30 is disposed on the side opposite to the basket table 10 with respect to the packing table 20. In other words, the basket table 10 and the automatic change machine 30 are arranged to face each other across the packing table 20. For example, the automatic change machine 30 is disposed on the left side of the packing table 20 when viewed from the customer side. The automatic change machine 30 includes a coin insertion port 31 and a money placing part 32 on its upper surface.

The money placing part 32 is a flat area on which money, such as coins, is placed. Also, the money placing part 32 is an area recessed from other areas of the upper surface excluding the coin insertion port 31. Being recessed, the money placing part 32 can hold money.

The coin insertion port 31 is a slot into which coins are inserted. The money placing part 32 and the coin insertion port 31 are formed on a substantially flat surface. Selected coins are slid along the money placing part 32 into the coin insertion port 31.

The automatic change machine 30 includes a coin dispensing port 33, a bill insertion port 34, and a bill dispensing port 35 on a side surface facing the customer. The coin dispensing port 33 dispenses coins as, for example, change. The bill insertion port 34 is an insertion slot into which bills are inserted. The bill dispensing port 35 dispenses bills as, for example, change.

The packing table 20 is a table on which items read by a first reading unit 53, a second reading unit 59, or a handy scanner 55 are placed. In other words, the packing table 20 is a table on which items to be sold are placed. For example, the packing table 20 is used to put items in a bag. The packing table 20 is disposed lateral to a first display unit 51. A first bag hanger 22 and a second bag hanger 23 are disposed on the packing table 20. The packing table 20 is an example of a second table.

The packing table 20 includes a flat top plate 21 on the upper side. The packing table 20 includes a weight scale for measuring the weight of an item. The weight scale measures the weights of items placed on the top plate 21, items placed in a bag hung on the first bag hanger 22 or the second bag hanger 23, and items placed on a temporary table 24. For example, the weight scale is implemented by a load cell. In the item registration process, the POS terminal 1 (or a processor of a first main unit 57 or a second main unit 58 described later) compares the weight of an item registered in an item master with the weight of the item measured by the weight scale. The POS terminal 1 thereby determines whether an item registered in the item registration process is placed on the packing table 20. When the weight of the item registered in the item master does not match the weight of the item measured by the weight scale, the POS terminal 1 suspends the item registration process to prevent fraud. The packing table 20 does not necessarily include the weight scale, and the weight scale may be omitted.

The first bag hanger 22 and the second bag hanger 23 are disposed on the top plate 21.

The first bag hanger 22 is used to hang a bag containing items. The first bag hanger 22 includes a pair of vertical bars 221, a horizontal bar 222, and a hook 223. The vertical bars 221 extend substantially perpendicularly from the top plate 21. The vertical bars 221 are disposed in a corner of the top plate 21 formed by the sides facing the automatic change machine 30 and the customer and a corner of the top plate 21 formed by the sides facing the automatic change machine 30 and the store clerk. That is, the vertical bars 221 are disposed in corners of the top plate 21 and arranged in a first direction. The first direction is parallel to the X-axis direction and is a direction to face the customer side. The vertical bars 221 are attached to the top plate 21 with, for example, screws. The horizontal bar 222 is supported by the vertical bars 221 and disposed substantially parallel to the X-axis direction. The hook 223 is supported by the vertical bars 221 and used to hang a bag. More specifically, the hook 223 is a rod-shaped member that extends toward the center of the packing table 20 and then bends upward. A bag can be hanged on the bent portion of the hook 223.

The second bag hanger 23 is used to hang a bag containing items. The second bag hanger 23 includes a pair of vertical bars 231, a horizontal bar 232, and a hook 233. The vertical bars 231 extend substantially perpendicularly from the top plate 21. The vertical bars 231 are disposed in a corner of the top plate 21 formed by the sides facing the basket table 10 and the customer and a corner of the top plate 21 formed by the sides facing the basket table 10 and the store clerk. That is, the vertical bars 231 are disposed in corners of the top plate 21 that are arranged in the first direction. The vertical bars 231 are attached to the top plate 21 with, for example, screws. The horizontal bar 232 is supported by the vertical bars 231 and disposed substantially parallel to the X-axis direction. The hook 233 is supported by the vertical bars 231 and used to hang a bag. More specifically, the hook 233 is a rod-shaped member that extends toward the center of the packing table 20 and then bends upward. A bag can be hanged on the bent portion of the hook 233.

Not only a bag but also a shopping basket of the customer may be placed on the top plate 21 of the packing table 20. A space in which a shopping basket can be placed is provided between the first bag hanger 22 and the second bag hanger 23. More specifically, the distance between the vertical bars 221 and the vertical bars 231 in the width direction is wider than the width of a general shopping basket. Furthermore, the hooks 223 and 233 are disposed in positions higher than the height of a shopping basket. Therefore, the customer can place not only a bag but also a shopping basket on the top plate 21 and place items in the shopping basket.

The first bag hanger 22 and the second bag hanger 23 are arranged such that the horizontal bars 222 and 232 are disposed parallel to each other.

The second bag hanger 23 supports the temporary table 24. More specifically, the horizontal bar 232 of the second bag hanger 23 supports the temporary table 24 such that the temporary table 24 is disposed not on the side of the first bag hanger 22 but on the side of the basket table 10. In other words, the horizontal bar 232 of the second bag hanger 23 supports the temporary table 24 such that the temporary table 24 is disposed on the customer side of the mounting table 40.

The temporary table 24 is supported by the second bag hanger 23, and is a table on which items are temporarily placed. For example, the temporary table 24 is formed of a flat plate. The temporary table 24 is supported by the second bag hanger 23 and is disposed on a side of the second bag hanger 23 adjacent to the mounting table 40. Accordingly, the temporary table 24 is disposed in front of a first display surface 511 of the first display unit 51. The temporary table 24 is an example of a first table. The second bag hanger 23 is attached to the top plate 21. Therefore, the weight scale included in the packing table 20 also measures the weight of an item placed on the temporary table 24.

The temporary table 24 may be formed of a material, such as a transparent material or a mesh material, that transmits visible light. With this configuration, the customer can visually recognize supplies placed on a supply counter 43 through the temporary table 24.

The mounting table 40 is disposed between the basket table 10 and the packing table 20. The mounting table 40 is a table on which various devices of the POS terminal 1 are placed. The mounting table 40 includes a base unit 41 and a supply counter 43.

The base unit 41 is a pedestal that has a columnar shape and stands substantially vertically. A first display unit 51, a payment terminal 52, a first reading unit 53, a printer 54, a handy scanner 55, a second display unit 56, a first main unit 57, a second main unit 58, and a second reading unit 59 are disposed on the base unit 41. The first display unit 51 is an example of a first display device. The first reading unit 53 is an example of a first reading device. The second display unit 56 is an example of a second display device. The second reading unit 59 is an example of a second reading device.

The first main unit 57 is disposed on a top plate 42 on the upper side of the base unit 41. The first main unit 57 is a main unit of a customer terminal disposed on the customer side. For example, the first main unit 57 includes a control unit, such as a processor, that controls the customer terminal and is disposed in a housing. More specifically, the first main unit 57 (or the processor) controls the first display unit 51, the payment terminal 52, the first reading unit 53, the printer 54, and the handy scanner 55.

The first display unit 51 is disposed on an upper part of the first main unit 57. The first display unit 51 is a touch panel display that displays images related to an item registration process for registering items read by the first reading unit 53, the second reading unit 59, or the handy scanner 55 and images related to a payment process for making a payment for the items registered in the item registration process. The first display unit 51 includes a first display surface 511 that displays images for the customer and receives various operations. The first display surface 511 faces the first direction, that is, faces the customer.

The printer 54 is disposed on the top plate 42 of the base unit 41 at a position closer to the customer side than the first main unit 57. The printer 54 prints a receipt showing items registered in the POS terminal 1 and purchased. Then, the printer 54 discharges the receipt from a receipt discharge port 541 facing the first direction.

The first reading unit 53 is disposed on the upper surface of the printer 54. The first reading unit 53 is a scanner that reads item information for identifying an item. The first reading unit 53 includes a first reading window 531 facing the first direction. The first reading unit 53 forms a reading area for reading item information in the first direction. That is, the first reading unit 53 reads item information by capturing an image of an item held over the first reading window 531. The first reading unit 53 may be a scanner that reads item information by irradiating an item held over the first reading window 531 with a laser beam.

The payment terminal 52 is disposed on a side of the printer 54 closer to the basket table 10. In the payment process, the payment terminal 52 is used to make a payment for an item with a credit card or electronic money. The payment terminal 52 includes an operation surface 521. The operation surface 521 includes numeric keys and a display. In this example, it is assumed that the payment terminal 52 is operated by the customer, and therefore the operation surface 521 faces the first direction. That is, the payment terminal 52 is disposed such that characters and numbers can be seen from the customer side. The customer makes a payment by operating the operation surface 521.

The handy scanner 55 is held in a holder 551 that is provided on a side of the first reading unit 53 closer to the packing table 20. The holder 551 holds the handy scanner 55 that is held in hand and used by the customer or the store clerk. The customer or the store clerk touches an item with the handy scanner 55 to read its item information. Since the handy scanner 55 is held in the holder 551 provided on a side of the first reading unit 53 closer to the packing table 20, the handy scanner 55 can be used or is accessible from both of the store clerk side and the customer side.

The second main unit 58 is disposed on the top plate 42 on the upper side of the base unit 41. The second main unit 58 is a main unit of a store clerk terminal disposed on the store clerk side. For example, the second main unit 58 includes a control unit, such as a processor, that is disposed in a housing and controls the store clerk terminal. More specifically, the second main unit 58 (or the processor) controls the second display unit 56 and the second reading unit 59.

The second display unit 56 is disposed on an upper part of the second main unit 58. The second display unit 56 is a touch panel display that displays images related to the item registration process for registering items read by the first reading unit 53, the second reading unit 59, or the handy scanner 55 and images related to the payment process for making a payment for the items registered in the item registration process. The second display unit 56 includes a second display surface 561 that displays images for the store clerk and receives various operations. The second display surface 561 faces a second direction toward the store clerk. In other words, the second display surface 561 faces the second direction opposite to the first direction in which the first display surface 511 of the first display unit 51 is oriented.

The second reading unit 59 is disposed inside of the housing of the second main unit 58. The second reading unit 59 is a scanner that reads item information for identifying an item through a second reading window 591 disposed on the store clerk side of the housing of the second main unit 58. More specifically, the second reading unit 59 forms, in the second direction, a reading area for reading item information through the second reading window 591. That is, the second reading unit 59 reads item information by capturing an image of an item held over the second reading window 591. The second reading unit 59 may be a scanner that reads item information by irradiating an item held over the second reading window 591 with a laser beam.

The supply counter 43 is a table that is disposed directly below the temporary table 24 and on the customer side of the mounting table 40. Supplies are placed on the supply counter 43. The supply counter 43 is an example of a third table. Furthermore, the supply counter 43 is formed at substantially the same height as the basket table 10 and the packing table 20. For example, supplies, such as bags for storing items and disposable chopsticks, are placed on the supply counter 43.

With the POS terminal 1 as described above, the client stands at a position facing the first display surface 511 of the first display unit 51. The customer uses the first reading unit 53 to read item information for identifying an item placed in a basket on the basket table 10. Alternatively, when the weight of an item is large and it is difficult for the customer to lift the item to the height of the first reading unit 53, the customer may use the handy scanner 55 to read the item information.

The customer places the item, the item information of which has been read, in a bag hung on the first bag hanger 22 or the second bag hanger 23. In other words, the customer places the item on the top plate 21 of the packing table 20. When the item is a fragile item, such as bread or an egg, the customer temporarily places the item on the temporary table 24. Then, at the final stage of the packing, the customer puts the item placed on the temporary table 24 in the bag. This enables the customer to prevent a fragile item from being crushed by other items.

When the item information is read by the first reading unit 53 or the handy scanner 55, the POS terminal 1 acquires various kinds of information from the item master containing information related to items. For example, the POS terminal 1 acquires, from the item master, information such as an item name, a unit price, and a weight. Then, the POS terminal 1 displays, on the first display unit 51, the item name and the unit price of the item identified by the read item information. With the displayed information, the customer can confirm whether the item read by the first reading unit 53 or the handy scanner 55 matches the item identified by the POS terminal 1.

Furthermore, the POS terminal 1 measures the weight of the item placed on the top plate 21 or the temporary table 24. The POS terminal 1determines whether a difference between the weight of the item identified based on the read item information and the weight of the item measured by the weight scale of the packing table 20 is within a set error range. When the difference in weight is outside of the error range, the POS terminal 1 notifies that the item has not been registered normally because the measured weight differs from the identified weight. For example, the POS terminal 1 displays a notification on the first display unit 51 or the second display unit 56, sends a notification to a terminal used by the store clerk, provides an audio notification by using a speaker built in the POS terminal 1, or gives a notification using an indicator lamp. Then, the POS terminal 1 suspends the item registration process. With this configuration, the POS terminal 1 can prevent fraud.

For example, the POS terminal 1 stops the item registration process and disables the subsequent registration of items. For example, when an item, the item information of which has not been read, is put in a bag, the POS terminal 1 enters an item registration disabled state in which the item registration is disabled. Then, the POS terminal 1 returns to an item registration enabled state in which the item registration is enabled when the corresponding item is removed from the packing table 20. For example, when an item having a weight different from the read item information is placed in a bag, the POS terminal 1 enters the item registration disabled state. Then, the POS terminal 1 returns to the item registration enabled state when the corresponding item is removed from the packing table 20 and an item having the same weight as the read item information is placed in the bag. Also, the POS terminal 1 may display, on the first display unit 51 or the second display unit 56, a method for restoring the POS terminal 1 to the item registration enabled state.

When the item registration is completed, the customer operates the first display unit 51 to indicate that the item registration has been completed. When receiving the operation indicating that the item registration has been completed, the POS terminal 1 displays an image prompting the customer to perform a payment process for the items registered in the item registration process. For example, the first display unit 51 displays an image that prompts the customer to put cash in the automatic change machine 30 when a payment is to be made with cash. Also, the first display unit 51 displays an image that prompts the customer to input information on a credit card or electronic money to the payment terminal 52 when a payment is to be made with the credit card or the electronic money.

The automatic change machine 30 calculates change when cash is inserted through the coin insertion port 31 and/or the bill insertion port 34. When there is change, the automatic change machine 30 dispenses the change from the coin dispensing port 33 and/or the bill dispensing port 35. The payment terminal 52 performs the payment process when information related to the payment process is input. When the payment process is completed, the printer 54 discharges a receipt showing, for example, the names and prices of sold items and the total amount of transaction from the receipt discharge port 541. In this way, the POS terminal 1performs the item registering process and the payment process.

However, since the customer is less familiar with the operation of the POS terminal 1 compared with the store clerk, it takes time for the customer to perform the item registration process and the payment process. For example, when the customer is unfamiliar with the operation of the POS terminal 1, when the number of items to be sold is large, or when there are many items without bar codes indicating item information, it takes time for the customer to perform the item registration process.

Therefore, each customer needs to stay for a long time in the installation area in which the POS terminal 1 is installed, and the installation area is congested with customers. Therefore, there is a demand for an apparatus that enables the store clerk to easily assist a customer taking a long time to perform the item registration process or the like.

The store clerk stands at a position facing the second display surface 561 of the second display unit 56. That is, the customer and the store clerk face each other across the POS terminal 1. Then, the store clerk performs the item registration process together with the customer.

Here, the POS terminal 1 includes the second display unit 56 and the second reading unit 59 that face a direction opposite to the first display unit 51 and the first reading unit 53. That is, the POS terminal 1 includes the second display unit 56 and the second reading unit 59 facing the store clerk. The second display unit 56 and the second reading unit 59 are disposed on the mounting table 40. Furthermore, the POS terminal 1 includes the handy scanner 55 that is disposed on the side surface of the upper plate 42 closer to the packing table 20 and can be picked up from both of the customer side and the store clerk side. That is, the handy scanner 55 is shared by the customer and the store clerk. In other words, the handy scanner 55 is disposed between the first display unit 51 and the second display unit 56 and adjacent to the packing table 20.

Furthermore, the POS terminal 1 includes the packing table 20 that is disposed lateral to the mounting table 40 and usable for packing from both of the customer side and the store clerk side.

As described above, the POS terminal 1 includes the second display unit 56 and the second reading unit 59 facing the store clerk. Therefore, the store clerk can perform the item registration together with the customer. Furthermore, there is no object in the space above the top plate 21 of the packing table 20 that hinders the packing by the store clerk. In other words, a space accessible from both of the customer side and the store clerk side (or from both of the first direction and the second direction) is formed above the top plate 21 of the packing table 20. Therefore, the store clerk can carry out the packing of items together with the customer.

With the above configuration of the POS terminal 1, compared with the configuration of a related-art apparatus in which the store clerk and the customer stand on the same side, share one display unit and one reading unit, and place items in a bag together, the store clerk can more easily assist the customer.

When the customer and the store clerk face each other to perform the item registration process, the POS terminal 1 may be configured to switch from a self-service mode in which the customer independently performs the item registration process and the payment process to a face-to-face mode in which the customer and the store clerk face each other to perform the item registration process together and the customer performs the payment process. For example, the POS terminal 1 may be configured to switch modes upon receiving a switching operation via an image displayed on the second display surface 561 of the second display unit 56. Alternatively, in the POS terminal 1, the second reading window 591 of the second reading unit 59 may be covered to prevent unintended reading of item information. In this case, the second reading window 591 of the second reading unit 59 is operable. However, by physically covering the second reading window 591 of the second reading unit 59, unintended reading of item information is prevented. In the face-to-face mode, the customer and the store clerk perform the item registration process, and the customer independently performs the payment process for registered items by using the automatic change machine 30 for cash payment or using the payment terminal 52 for payment with a credit card or electronic money.

As described above, the POS terminal 1 according to the first embodiment includes the first display unit 51 including the first display surface 511 facing the first direction and the second display unit 56 including the second display surface 561 facing the second direction opposite to the first direction. The POS terminal 1 includes the temporary table 24 in front of the first displaying surface 511. In addition, the POS terminal 1 includes the packing table 20 that is used for packing of items and disposed lateral to the first displaying unit 51. The POS terminal 1 includes the supply counter 43 that is disposed directly below the temporary table 24 and on which various supplies are placed. With this configuration, the store clerk can easily assist the customer in the item registration process or the like while facing the customer across the POS terminal 1.

### (First Variation)

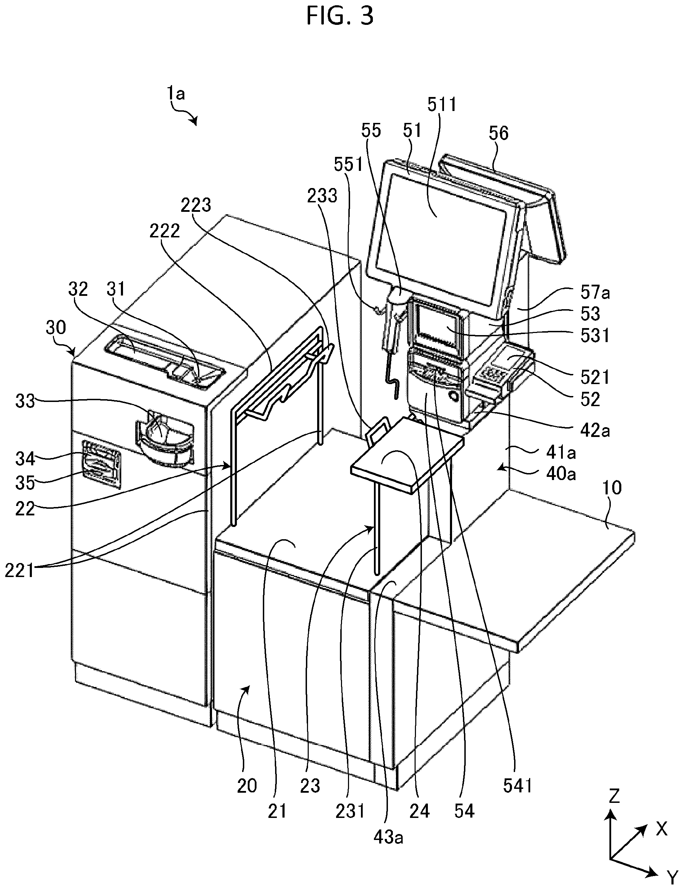

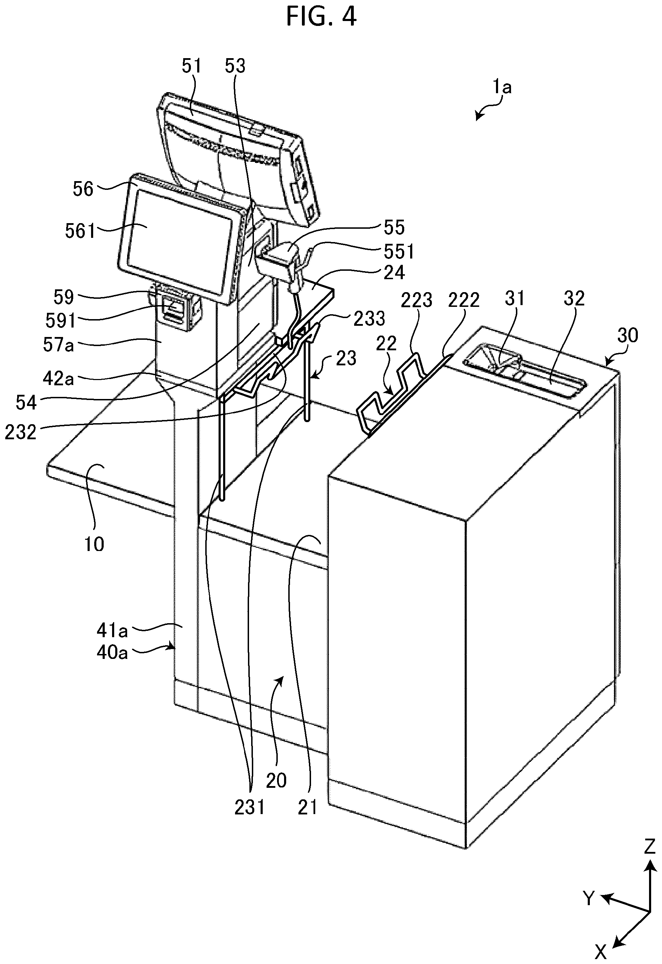

A POS terminal 1a according to a first variation includes an integrated main unit 57a that is formed by integrating the first main unit 57 and the second main unit 58. The POS terminal 1a includes a thin base unit 41a. FIG. 3 is an external perspective view of the POS terminal 1a according to the first variation. FIG. 4 is an external perspective view of the POS terminal 1a according to the first variation. More specifically, FIG. 3 is a perspective view of the POS terminal 1a as viewed from the customer. FIG. 4 is a perspective view of the POS terminal 1a as viewed from the store clerk.

The integrated main unit 57a is formed by integrating the first main unit 57 of the customer terminal disposed on the customer side with the second main unit 58 of the store clerk terminal disposed on the store clerk side. For example, the integrated main unit 57a (or a processor of the integrated main unit 57a) controls both of the first display unit 51 and the second display unit 56. The integrated main unit 57a is an example of a third main unit. More specifically, the integrated main unit 57a controls the first display unit 51, the payment terminal 52, the first reading unit 53, the printer 54, the handy scanner 55, the second display unit 56, and the second reading unit 59.

The base unit 41a has a smaller width in the Y-axis direction compared with the base unit 41 according to the first embodiment. The base unit 41a is formed such that the width in the Y-axis direction of the base unit 41a increases toward a top plate 42a. Because the width of the base unit 41a in the Y-axis direction is smaller, the width of a supply counter 43a in the Y-axis direction is also smaller.

The integrated main unit 57a formed by integrating the first main unit 57 and the second main unit 58 is disposed on the top plate 42a of the base unit 41a. When the first main unit 57 and the second main unit 58 are integrated, the same components included in the first main unit 57 and the second main unit 58 are implemented by one component. Furthermore, the layout of various components is optimized. Therefore, the length of the integrated main unit 57a in the X-axis direction is shorter than the total length of the first main unit 57 and the second main unit 58.

Accordingly, the POS terminal 1a according to the first variation requires a smaller installation area compared with the POS terminal 1 according to the first embodiment. Reducing the size of the POS terminal 1a makes it possible to shorten the line along which operations from the reading of item information to the packing are performed and enables the customer to perform the operations more easily.

On the other hand, the POS terminal 1 according to the first embodiment does not require combining the first main unit 57 and the second main unit 58 and therefore has a simple configuration. Therefore, the POS terminal 1 according to the first embodiment can be manufactured at a lower cost than the POS terminal 1a according to the first variation. Furthermore, since the supply counter 43 of the POS terminal 1 according to the first embodiment has a larger area than the supply counter 43a of the POS terminal 1a according to the first variation, more supplies can be placed on the supply counter 43.

### (Second Variation)

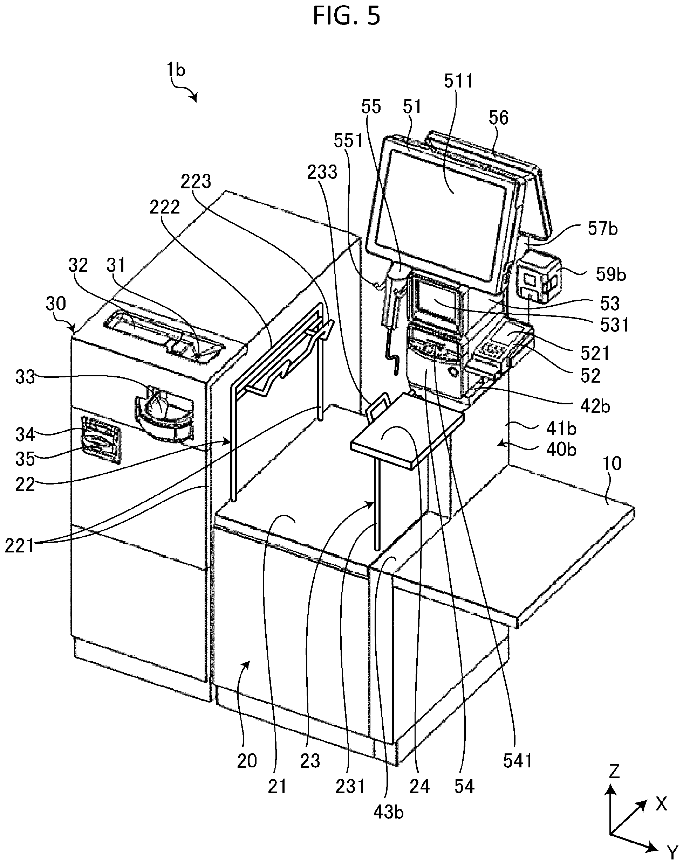

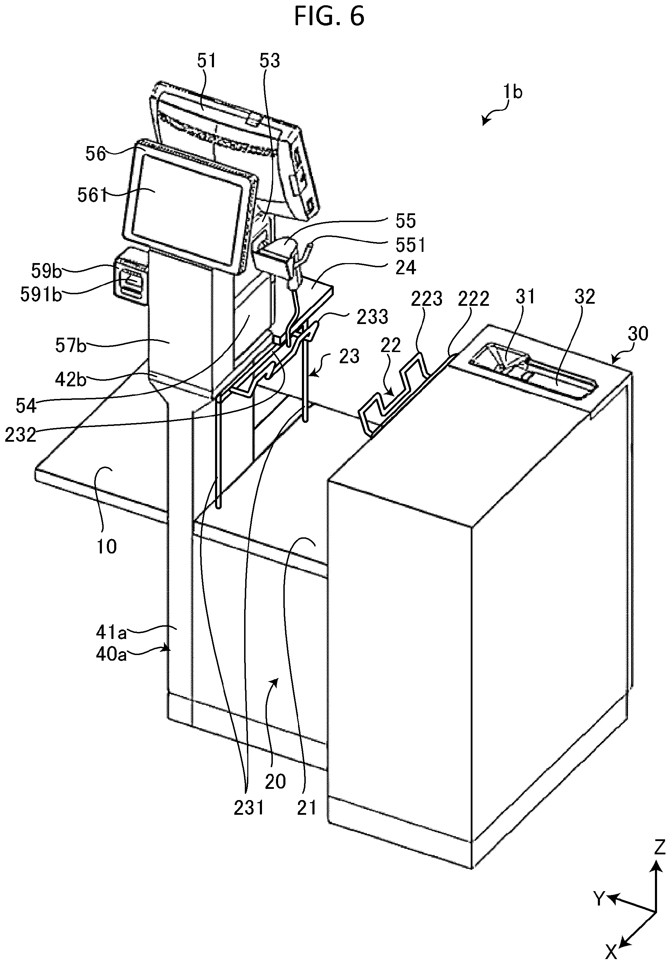

A POS terminal 1b according to a second variation includes a second reading unit 59b disposed outside of the housing of an integrated main unit 57b. FIG. 5 is an external perspective view of the POS terminal 1b according to the second variation. FIG. 6 is an external perspective view of the POS terminal 1b according to the second variation.

For example, the second reading unit 59b is disposed lateral to the integrated main unit 57b or the second display unit 56. More specifically, the second reading unit 59b is attached to a side surface of the integrated main unit 57b closer to the basket table 10 with a screw or the like

Here, in the first variation, the second reading unit 59a is disposed in the housing of the integrated main unit 57a, and therefore the integrated main unit 57a protrudes toward the store clerk by an amount corresponding to the storage space for the second reading unit 59a. That is, the integrated main unit 57a is longer in the X-axis direction.

In the POS terminal 1b according to the second variation, the second reading unit 59b is disposed outside of the integrated main unit 57b. Therefore, the integrated main unit 57b does not protrude by an amount corresponding to the storage space for the second reading unit 59b. That is, the integrated main unit 57b is shortened in the X-axis direction.

This makes it possible to reduce the installation area of the POS terminal 1b.

### (Third Variation)

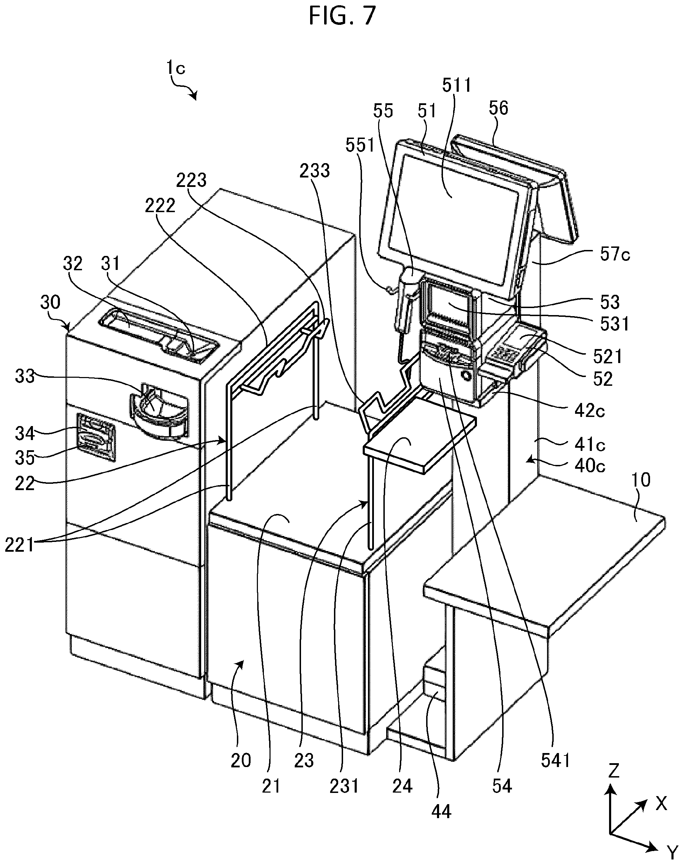

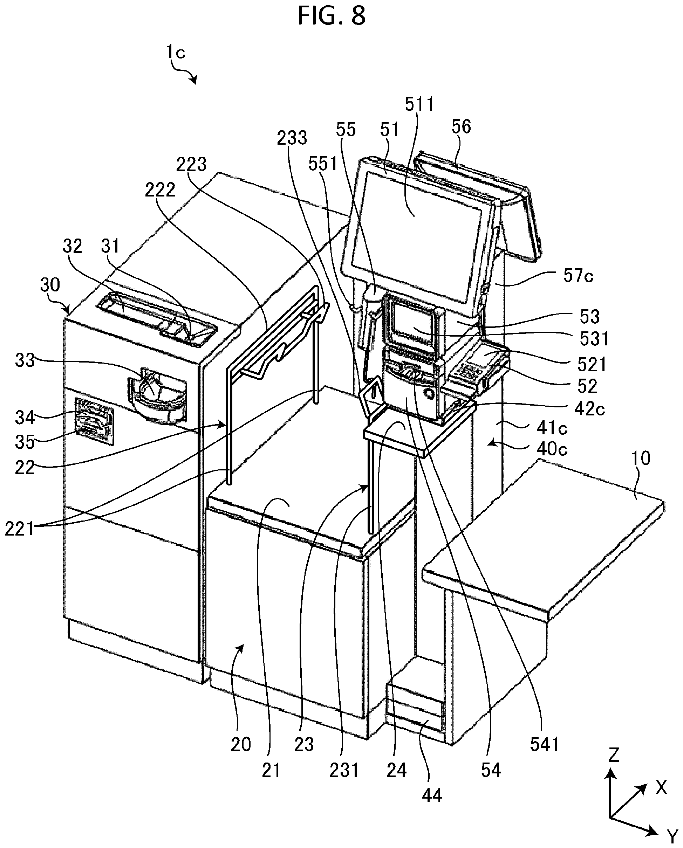

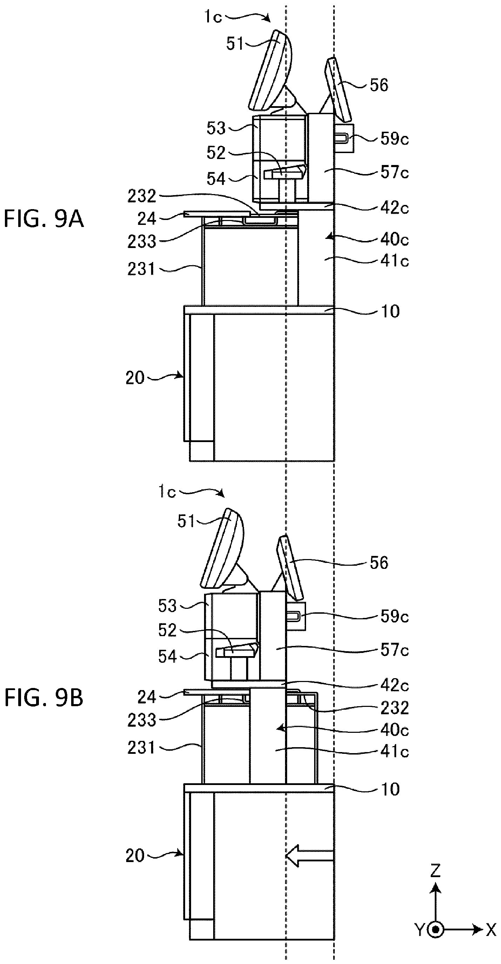

A POS terminal 1c according to a third variation includes a mounting table 40c that is movable in the X-axis direction. FIG. 7 is an external perspective view of the POS terminal 1c according to the third variation with the mounting table 40c moved to the store clerk side. FIG. 8 is an external perspective view of the POS terminal 1c according to the third variation with the mounting table 40c moved to the customer side. FIGs. 9A and 9B are external side views of the POS terminal 1c according to the third variation. FIG. 9A illustrates a state in which the mounting table 40c is positioned on the store clerk side. FIG. 9B illustrates a state in which the mounting table 40c is positioned on the customer side.

Here, it is preferable for the store clerk to hold an item over the second reading unit 59c with his/her arm extended, that is, without bending his/her arm in the X-axis direction.

When the second reading unit 59c is positioned as illustrated in FIG. 9A, the store clerk bends his/her arm to move an item in his/her hand toward him/herself. Next, the store clerk holds the item over the second reading unit 59c with his/her arm bent. The second reading unit 59c reads item information for identifying the item. Then, after the item information is read by the second reading unit 59c, the store clerk stretches his/her arm to place the item on the packing table 20. As described above, when the distance between the second reading unit 59c and the store clerk is short, the store clerk needs to bend his/her arm every time to read an item.

When the second reading unit 59c is positioned as illustrated in FIG. 9B, since the distance between the store clerk and the second reading unit 59c is longer than that in FIG. 9A, the store clerk can reduce the amount of bending his/her arm. That is, the store clerk can hold an item over the second reading unit 59c without bending his/her arm too much. Furthermore, since the store clerk does not have to bend his/her arm, the store clerk can place the item on the packing table 20 without stretching his/her arm.

Here, the temporary table 24 is supported by the second bag hanger 23 and is disposed on the customer side of the mounting table 40c. In order to prevent the temporary table 24 and the mounting table 40c from colliding with each other when the mounting table 40c is moved to the customer-side, a base unit 41c of the mounting table 40c is made thin in the X-axis direction. A top plate 42c disposed on the base unit 41c is wider than the cross-sectional area of the base unit 41c in the horizontal direction.

The first display unit 51, the payment terminal 52, the first reading unit 53, the printer 54, the handy scanner 55, the second display unit 56, the integrated main unit 57c, and the second reading unit 59c are disposed on the top plate 42c. This configuration makes it possible to dispose various devices on the mounting table 40c while preventing the mounting table 40c from colliding with the temporary table 24.

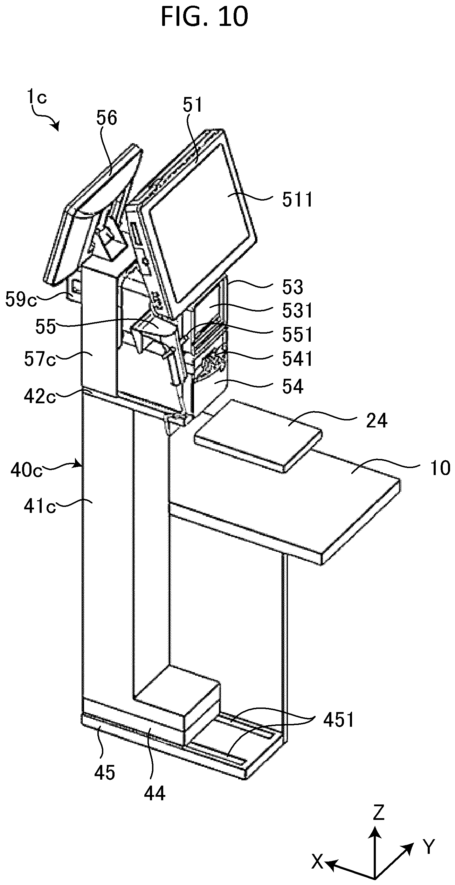

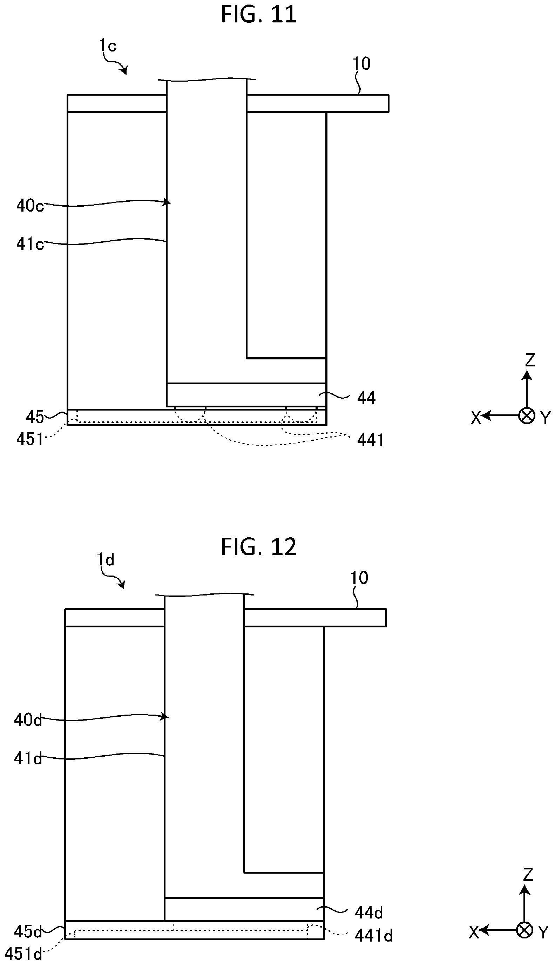

FIG. 10 is an external perspective view of the mounting table 40c according to the third variation. FIG. 11 is an external side view of a bottom part 44 of the mounting table 40c. The mounting table 40c includes a moving mechanism 441 that enables the mounting table 40c to move in the X-axis direction and is disposed on the bottom part 44 provided on the bottom of the base unit 41c. For example, the moving mechanism 441 includes multiple wheels that rotate to move the mounting table 40c.

Furthermore, the mounting table 40c is placed on a floor unit 45 that connects the basket table 10 and the packing table 20 to each other. The floor unit 45 includes a guide 451 that guides the movement of the moving mechanism 441. For example, the guide 451 includes grooves that guide the wheels of the moving mechanism 441. More specifically, the guide 451 includes grooves that are long in the X-axis direction. When pushed by the store clerk or the like, the wheels of the moving mechanism 441 roll along the grooves of the guide 451, and the mounting table 40c moves in the X-axis direction. In addition, the guide 451 may have walls that serve as stoppers for the wheels at both ends in the X-axis direction. Accordingly, the stoppers can limit the moving distance of the mounting table 40c so that the mounting table 40c is not moved by the store clerk more than necessary.

### (Fourth Variation)

APOS terminal 1d according to a fourth variation includes a moving mechanism 441d and a guide 451d that include slide rails. FIG. 12 is an external side view of a bottom part 44d of a mounting table 40d according to the fourth variation.

The moving mechanism 441d is provided on the bottom part 44d and includes a first slide rail that extends in the X-axis direction. Furthermore, a floor unit 45d includes the guide 451d that extends in the X-axis direction and includes a second slide rail. The moving mechanism 441d and the guide 451d, that is, the first slide rail and the second slide rail, are connected to each other, and one or more balls for reducing friction are provided between the moving mechanism 441d and the guide 451d. When pressed by a clerk or the like, the moving mechanism 441d slides along the guide 451d to move the mounting table 40d in the X-axis direction. In addition, the guide 451d may include stoppers that limit the maximum moving distance of the first slide rail. The stoppers limit the moving distance of the mounting table 40d to an optimum distance so that the mounting table 40d is not moved by the store clerk more than necessary.

### (Fifth Variation)

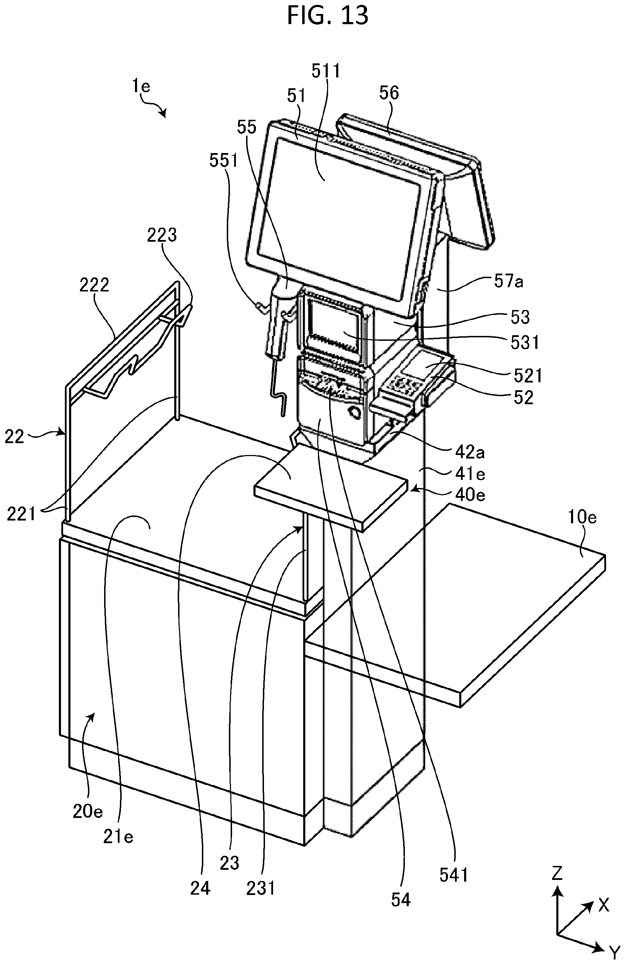

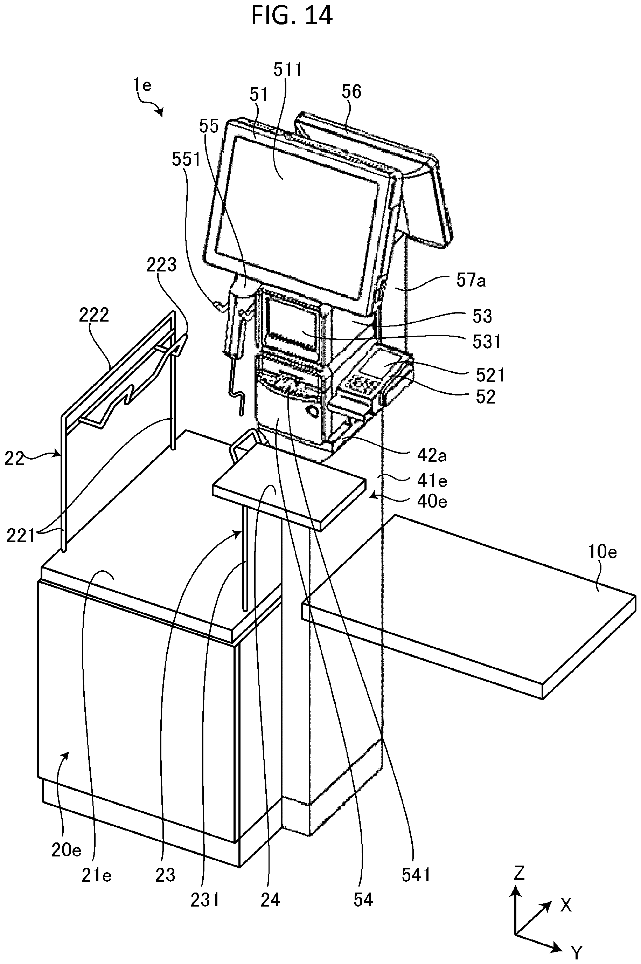

A POS terminal 1e according to a fifth variation is configured such that the orientations of a basket table 10e and a packing table 20e can be changed. FIG. 13 is an external perspective view of the POS terminal 1e according to the fifth variation. FIG. 13 illustrates a state in which the orientation of the basket table 10e is changed such that the longitudinal direction of the basket table 10e becomes parallel to the X-axis direction. FIG. 14 is an external perspective view of the POS terminal 1e according to the fifth variation. FIG. 14 illustrates a state in which the orientation of the packing table 20e is changed such that the longitudinal direction of the packing table 20e becomes parallel to the X-axis direction. Thus, the shop clerk can change the orientations of the basket table 10e and the packing table 20e according to the layout of the installation area.

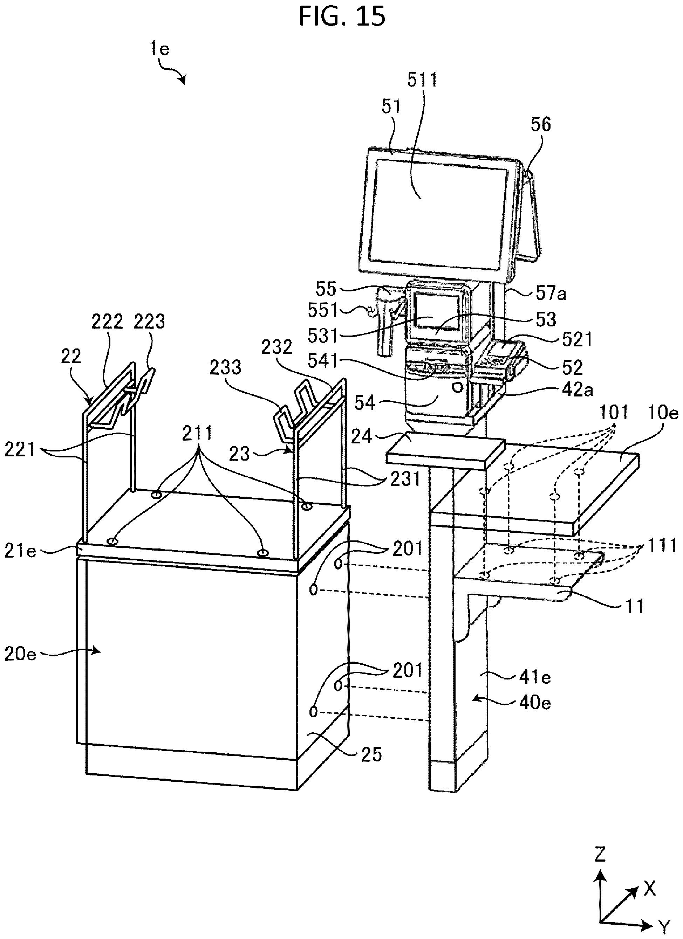

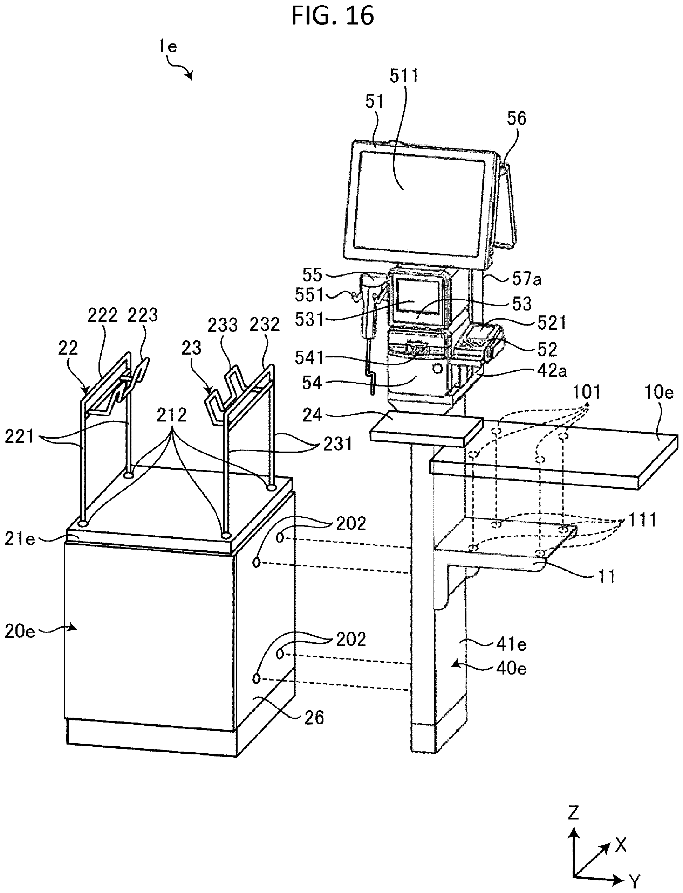

FIG. 15 is an exploded view illustrating a state in which the basket table 10e and the packing table 20e of the POS terminal 1e according to the fifth variation are disassembled. The basket table 10e illustrated in FIG. 15 is oriented such that its longitudinal direction is parallel to the X-axis direction, and the packing table 20e is oriented such that its longitudinal direction is parallel to the Y-axis direction. FIG. 16 is an exploded view illustrating a state in which the basket table 10e and the packing table 20e of the POS terminal 1e according to the fifth variation are disassembled. The basket table 10e shown in FIG. 16 is oriented such that its longitudinal direction is parallel to the Y-axis direction, and the packing table 20e is oriented such that its longitudinal direction is parallel to the X-axis direction.

The basket table 10e is attached to a base unit 41e of a mounting table 40e via an attachment 11.

The attachment 11 is an L-shaped member. A vertical portion of the attachment 11 is attached to the base unit 41e, and a horizontal portion of the attachment 11 is attached to the basket table 10e.

The basket table 10e has first connecting parts 101 for connection with the attachment 11. The attachment 11 has second connecting parts 111 for connection with the basket table 10e. The first connecting parts 101 and the second connecting parts 111 are, for example, screw holes. After the orientation of the basket table 10e is changed, the basket table 10e is stacked on the attachment 111 such that the first connecting parts 101 are aligned with the second connecting parts 111. That is, the basket table 10e is connected to the attachment 11 by inserting screws into the first connecting parts 101 and the second connecting parts 111 that are aligned with each other.

The packing table 20e is attached to the base unit 41e of the mounting table 40e. The base unit 41e of the mounting table 40e has third connecting parts (not shown). The packing table 20e has fourth connecting parts 201 formed on a first side surface 25 and fifth connecting parts 202 formed on a second side surface 26.

For example, when the fourth connecting parts 201 formed on the first side surface 25 are connected with the third connecting parts (not shown) formed on the base unit 41e of the mounting table 40e, the packing table 20e is oriented such that its longitudinal direction is parallel to the Y-axis direction. When the fifth connecting parts 202 formed on the second side surface 26 are connected with the third connecting parts (not shown) formed on the base unit 41e of the mounting table 40e, the packing table 20e is oriented such that its longitudinal direction is parallel to the X-axis direction.

The third connecting parts (not shown), the fourth connecting parts 201, and the fifth connecting parts 202 are, for example, screw holes. That is, the packing table 20e and the base unit 41e are connected to each other by inserting screws into the third connecting parts (not shown) and the fourth connecting parts 201, or the third connecting parts (not shown) and the fifth connecting parts 202, that are aligned with each other.

Furthermore, a top plate 21e of the packing table 20e has sixth connecting parts 211 and seventh connecting parts 212 to which the first bag hanger 22 and the second bag hanger 23 are attachable such that the orientations of the first bag hanger 22 and the second bag hanger 23 can be changed according to the orientation of the longitudinal direction of the packing table 20e. For example, the first bag hanger 22 and the second bag hanger 23 are arranged according to the orientation of the longitudinal direction of the packing table 20e. Also, the first bag hanger 22 and the second bag hanger 23 are connected to the sixth connecting parts 211 or the seventh connecting parts 212 depending on their arrangement.

For example, when the longitudinal direction of the packing table 20e is parallel to the Y-axis direction, the first bag hanger 22 and the second bag hanger 23 are connected to the sixth connecting parts 211 of the top plate 21e. For example, when the longitudinal direction of the packing table 20e is parallel to the X-axis direction, the first bag hanger 22 and the second bag hanger 23 are connected to the seventh connecting parts 212 of the top plate 21e. The sixth connecting parts 211 and the seventh connecting parts 212 are, for example, screw holes. That is, the vertical bars 221 of the first bag hanger 22 and the vertical bars 231 of the second bag hanger 23 are attached to the sixth connecting parts 211 or the seventh connecting parts 212.

The POS terminals 1, 1a, 1b, 1c, 1d, and 1e are examples of sales data processing apparatuses of this disclosure.

The POS terminals 1, 1a, 1b, 1c, 1d, and 1e can be used in the following modes. For example, the POS terminals 1, 1a, 1b, 1c, 1d, and 1e can be switched to a normal mode. In the normal mode, the store clerk performs the item registration process and the payment process for items registered in the item registration process. In this mode, the store clerk stands on the customer side shown in FIG. 1 and operates the POS terminal 1, 1a, 1b, 1c, 1d, or 1e.

For example, the POS terminals 1, 1a, 1b, 1c, 1d, and 1e can be switched to a customer payment mode. In the customer payment mode, the store clerk performs the item registration process, and the customer performs the payment process for items registered in the item registration process. In this mode, the customer stands on the customer side shown in FIG. 1, and the store clerk stands on the store clerk side shown in FIG. 2. Then, the store clerk performs the item registration process by operating the second reading unit 53, and the customer performs the payment process by operating the automatic change machine 30 and the second reading unit 59, 59a, 59b, or 59c. The POS terminals 1, 1a, 1b, 1c, 1d, and 1e can achieve the above-described advantageous effects even in these modes.

In addition, the POS terminals 1, 1a, 1b, 1c, 1d, and 1e can operate in any of the self-service mode, the face-to-face mode, the normal mode, and the customer payment mode. Furthermore, the POS terminals 1, 1a, 1b, 1c, 1d, and 1e do not necessarily support all of the self-service mode, the face-to-face mode, the normal mode, and the customer payment mode. That is, the POS terminals 1, 1a, 1b, 1c, 1d, and 1e may support one or more of the self-service mode, the face-to-face mode, the normal mode, and the customer payment mode.

While certain embodiments have been described, the embodiments have been presented by way of example only, and are not intended to limit the scope of the disclosure. Indeed, the novel embodiments described herein may be embodied in a variety of other forms; furthermore, various omissions, substitutions, and changes in the form of the embodiments described herein may be made without departing from the spirit of the disclosure. The accompanying claims and their equivalents are intended to cover such forms or modifications as would fall within the scope and spirit of the disclosure.

Programs executed by each device in the above-described embodiments or variations may be installed in advance in a storage medium (e.g., a ROM or a storage unit) included in the device. However, the present invention is not limited to this example. As another example, programs may be recorded in a computer-readable storage medium, such as a CD-ROM, a flexible disk (FD), a CD-R, or a digital versatile disk (DVD) in installable formats or executable formats. Furthermore, the storage medium is not limited to a medium that is independent of a computer or an embedded system, and may be a storage medium in which programs downloaded via a LAN, the Internet, or the like are stored or temporarily stored.

Furthermore, programs executed by each device in the above-described embodiments or variations may be stored in a computer connected to a network such as the Internet, and the programs may be downloaded via the network or may be provided or distributed via a network such as the Internet.

## Claims

1. A sales data processing apparatus comprising:
a first display device facing a first direction;
a second display device facing a second direction opposite to the first direction;
a first table that is disposed in front of the first display device and on which an item is placeable;
a second table disposed lateral to the first display device;
a bag hanger disposed on the second table and on which a bag is hangable; and
a third table disposed directly below the first table.

2. The sales data processing apparatus according to claim 1, wherein
the first table is attached to and supported by the bag hanger, wherein preferably:
the second table includes a weight scale, and
the sales data processing apparatus is configured to acquire a total weight of one or more items on the first and second tables based on an output from the weight scale.

3. The sales data processing apparatus according to claim 1 or 2, further comprising either
a first processor configured to control the first display device and a second processor configured to control the second display device,
or
a processor configured to control both of the first display device and the second display device.

4. The sales data processing apparatus according to any of the preceding claims, further comprising:
a mounting table on which the first display unit and the second display unit are disposed and including a moving mechanism movable in the first direction and the second direction.

5. The sales data processing apparatus according to claim 4, further comprising:
a fourth table, wherein
the mounting table is between the second table and the fourth table, and
at least one of the second table and the fourth table includes a connecting part that connects the at least one of the second table and the fourth table to the mounting table such that an orientation of a longitudinal direction of the at least one of the second table and the fourth table is changeable, wherein preferably:
the second table includes the connecting part, and
the second table further includes a top plate including a connecting part to which the bag hanger is attached such that an orientation of the bag hanger is changeable according to the orientation of the longitudinal direction of the second table.

6. The sales data processing apparatus according to claim 4 or 5, further comprising:
a floor unit on which the mounting table is disposed, wherein
the floor unit includes a guide along which the moving mechanism is movable.

7. The sales data processing apparatus according to claim 6, wherein
the guide includes stoppers, each of which is disposed at an end of the guide.

8. The sales data processing apparatus according to claim 6, wherein
the moving mechanism includes wheels, and
the guide includes grooves for guiding the wheels.

9. The sales data processing apparatus according to claim 6, wherein
the moving mechanism includes a first slide rail, and
the guide includes a second slide rail connectable to the first slide rail.

10. The sales data processing apparatus according to any of the preceding claims, further comprising:
a first reading device including a reading window facing the first direction; and
a second reading device including a reading window facing the second direction,
wherein preferably the second reading device is disposed lateral to the second display device.

11. The sales data processing apparatus according to any of the preceding claims, wherein
the second table includes a weight scale, and
the sales data processing apparatus is configured to compare a weight measured by the weight scale with a weight of an item registered in an item master database.

12. The sales data processing apparatus according to any of the preceding claims, further comprising:
a handy scanner that is disposed between the first display device and the second display device and adjacent to the second table.

13. The sales data processing apparatus according to any of the preceding claims, wherein
the first table is formed of a transparent material.

14. The sales data processing apparatus according to any of the preceding claims, wherein
the second table is disposed such that an item placed thereon is accessible from both of the first direction and the second direction.

15. The sales data processing apparatus according to any of the preceding claims, wherein
upon receiving a switching operation, the sales data processing apparatus is configured to switch from a first mode in which a customer performs an item registration process for registering an item and a payment process of making a payment for the registered item, to a second mode in which both the customer and a store clerk can perform the item registration process and the customer performs the payment process, wherein preferably
the sales data processing apparatus is also switchable to a third mode in which the store clerk performs the item registration process and the payment process and to a fourth mode in which the store clerk performs the item registration process and the customer performs the payment process.
